# EUROPÄISCHE PATENTSCHRIFT

(11) **EP 0 981 735 B1**
(45) Veröffentlichungstag und Bekanntmachung des Hinweises auf die Patenterteilung: **27.02.2008**
(21) Anmeldenummer: 98933509.6
(22) Anmeldetag: 12.05.1998
(51) Int. Cl.: G01N 21/64, G01N 21/85

(54) **VORRICHTUNG ZUR MESSUNG VON DURCH LICHT ANGEREGTER FLUORESZENZ UND DEREN VERWENDUNG**
DEVICE FOR MEASURING LIGHT-ACTIVATED FLUORESCENCE AND ITS USE
DISPOSITIF DE MESURE DE FLUORESCENCE ACTIVEE PAR LA LUMIERE ET SON UTILISATION

(30) Priorität: 12.05.1997 DE 19719422
(43) Veröffentlichungstag der Anmeldung: 01.03.2000
(73) Patentinhaber: Kirschner, Uwe, 01139 Dresden (DE); Lau, Matthias, 01307 Dresden (DE)
(72) Erfinder: LAU, Matthias, D-01307 Dresden (DE)
(74) Vertreter: Pfenning, Meinig & Partner GbR
(86) Internationale Anmeldenummer: PCT/DE1998/001316
(87) Internationale Veröffentlichungsnummer: WO 1998/052022

(56) Entgegenhaltungen:
- DD-A- 106 086
- GB-A- 2 265 711
- US-A- 3 992 631
- US-A- 5 319 975
- US-A- 5 489 536
- OPITZ N ET AL: "OXYGEN SENSOR FOR THE TEMPERATURE RANGE 300 TO 500 K BASED ON FLUORESCENCE QUENCHING OF INDICATOR-TREATED SILICONE RUBBER MEMBRANES" SENSORS AND ACTUATORS, Bd. 13, Nr. 2, 1988, Seiten 159-163, XP002078968

## Beschreibung

Die Erfindung betrifft eine Vorrichtung zur Messung von durch Licht angeregter Fluoreszenz an mindestens einer einen fluoreszierenden Stoff enthaltenden Schicht und deren Verwendung zur Messung fluidischer Stoffe, die eine Fluoreszenzlöschung in zumindest einer der fluoreszierenden Schichten bewirken.

Bisher üblicherweise verwendete Meßverfahren und Meßvorrichtungen haben den Nachteil, daß das Verhältnis von Fluoreszenzlicht zum erforderlichen Licht für die Anregung der Fluoreszenz sehr klein ist, so daß es getrennt werden muß und demzufolge eine Miniaturisierung, die für viele Anwendungsfälle erforderlich ist, bisher ausgeschlossen war.

Weitere bekannte Lösungen erreichen keine ausreichende Trennung zwischen dem anregenden Licht und dem Fluoreszenzlicht nicht erreicht werden konnte.

Dem entgegen zu treten, ist bisher ein aufwendiger komplizierter optischer Aufbau verwendet worden, der viele optische Elemente, die auch kostenintensiv sind, erforderlich macht, bei demzufolge insbesondere Probleme bei der Miniaturisierung und Prozeßeinbindung aufgetreten sind.

Die bekannten Lösungen haben weiter den Nachteil, daß die Meßsignalerfassung relativ langsam erfolgt ist und außerdem Fehler durch Koppeldrift (Temperaturschwankung, Mismatching oder durch Modemkopplung) aufgetreten und nur schwer berücksichtigt werden konnten.

In DD 106 086 ist eine Meßsonde beschrieben, bei der Fluoreszenz in einer Schicht angeregt wird, wobei das Anregungslicht durch eine einzige Lichtleitfaser, die ringförmig mindestens eine weitere Lichtleitfaser für Fluoreszenzlicht umgibt, auf die Schicht gerichtet wird. Das Fluoreszenzlicht kann mit einem Detektor gemessen und dessen Meßwert als Maß für den Gehalt bzw. die Konzentration eines Stoffes, infolge von Fluoreszenzlöschung benutzt werden. Für eine Referenzmessung wird eine zweite Lichtleitfaser verwendet, die Fluoreszenzlicht eines Schichtbereiches, der gegenüber dem Meßmedium abgeschirmt ist, auf einen zweiten Detektor richtet, benutzt.

Mit dieser Lösung ist es jedoch nicht möglich, eine konkrete und genaue lokale Zuordnung der erfaßbaren Fluoreszenzintensität über die angeregte Schichtfläche zu sichern, die jedoch neben anderem auch wegen einer nicht genau definierten lokalen Anregung oder einer nichtdefinierten, inhomogenen Anordnung des fluoreszierenden Stoffes in der Schicht für genaue Messungen erforderlich ist. Außerdem ist eine absolute optische Trennung für eine gleichzeitige Referenzmessung bzw. weitere Messungen für andere Stoffe erforderlich.

Daneben ist in GB 2265711 A1 ein optischer Fasersensor beschrieben, bei dem zwei in einem bestimmten Winkel zueinander geneigte Lichtleitfasern verwendet werden sollen. Dabei dient eine der Lichtleitfasern dazu, um Licht zu senden und die andere Lichtleitfaser dazu, um reflektiertes Licht aufzunehmen und auf einen geeigneten Detektor zu richten. Die Ausrichtung der beiden Lichtleitfasern in einem Winkel zueinander wird dort vorgeschlagen, um eine Vergrößerung des möglichen Detektionsbereiches für reflektiertes Licht zu erreichen, da sich eine vergrößerte Überschneidung des Lichtaustrittskonus mit dem Lichteintrittskonus der beiden Lichtleitfasern erreichen läßt.

In US 3,992,631 ist ein System und ein Verfahren zur Durchführung von Fluoreszenzimmuntests beschrieben, bei dem u.a. auf die Möglichkeit der Verwendung von verschiedenen Lichtleitfasern in einer Bündelanordnung hingewiesen worden ist.

Es ist daher Aufgabe der Erfindung, eine Vorrichtung vorzuschlagen, die miniaturisiert ausgebildet werden kann und daher flexibel an verschiedene Applikationen anpassbar ist und eine ausreichende Meßgenauigkeit erreicht.

Erfindungsgemäß wird diese Aufgabe durch die Merkmale des Patentanspruchs 1 gelöst. Vorteilhafte Ausgestaltungsformen und Weiterbildungen der Erfindung ergeben sich bei Verwendung der in den untergeordneten Ansprüchen genannten Merkmale.

Die erfindungsgemäße Vorrichtung zur Messung von durch Licht angeregter Fluoreszenz an mindestens einer einen fluoreszierenden Stoff enthaltenden Schicht besteht im wesentlichen aus einem Meßkopf, in dem mindestens eine Lichtquelle, die Licht von Fluoreszenz(en) in der bzw. in den Schicht(en) anregenden Wellenlänge(n) aussendet und mindestens einem Detektor, der die Intensität des Fluoreszenzlichtes mißt. Das zur Anregung der Fluoreszenz auf die Schicht(en) gerichtete Licht wird über mindestens einen Lichtwellenleiter auf die fluoreszierende Schicht gerichtet. Dabei kann der gleiche Lichtwellenleiter auch das Fluoreszenzlicht auf den Detektor richten. Es können mehrere fluoreszierende Schichten lokal voneinander getrennt nebeneinander bzw. ggf. teilweise überlagert angeordnet und mit anregendem Licht jeweils bestrahlt werden.

Wichtig ist es, die Stirnflächen der Lichtwellenleiter für das Fluoreszenzlicht unter Berücksichtigung der numerischen Aperturen sämtlicher Lichtwellenleiter anzuordnen bzw. auszurichten, um eine genaue lokale Zuordnung der Meßwerte zu erreichen. Eine weitere Möglichkeit zur Erreichung dieses Zieles besteht darin, eine Ausrichtung dieser Lichtwellenleiter in bezug zu einer bzw. mehreren fluoreszierende(n) Stoff(e) enthaltende Schicht(en) vorzunehmen.

Für die Messung werden die fluoreszierende Schicht(en) an dem bzw. den Ende(n) der Lichtwellenleiter oder an einem geeigneten Träger oder einem Körper angeordnet oder an diesen kontaktiert.

Bevorzugt werden Lichtleitfasern als Lichtwellenleiter verwendet.

Es besteht also prinzipiell die Möglichkeit, mehrere verschiedene fluoreszierende Schichten anzuordnen und mit einer oder mehreren verschiedenen Lichtquellen, die jeweils Licht mit Wellenlängen, die Fluoreszenz(en) anregen, aussenden, einzusetzen. Damit können mit nur einer Messung mehrere verschiedene fluidische Stoffe detektiert werden, die in den verschiedenen Schichten eine Fluoreszenzlöschung bewirken.

Die Erfindung kann aber auch dahingehend weitergebildet werden, daß mehrere Lichtleitfasern verwendet werden, die verschiedene Lichtarten zu verschiedenen voneinander getrennt angeordneten Detektoren richten.

So kann beispielsweise das Licht einer Lichtquelle auf eine fluoreszierende Schicht gerichtet werden, von dort das Fluoreszenzlicht durch eine zweite Lichtleitfaser auf einen im Meßkopf angeordneten Detektor gerichtet und zur Gewinnung eines Referenzsignales in der Schicht reflektiertes Anregungslicht durch eine dritte Lichtleitfaser auf einen zweiten Detektor gerichtet werden. Die Dritte oder eine zusätzliche Lichtleitfaser kann auch für ein zweites Fluoreszenzlicht genutzt werden.

Dabei können die fluoreszierende Schicht bzw. mehrere fluoreszierende Schichten, die bevorzugt auf einem als Träger dienenden Substrat aufgebracht sind, unter Verwendung einer Kappe bzw. eines austauschbaren Trägers einfach auf den Meßkopf aufgesteckt werden, so daß ein einfacher Austausch möglich wird. Dabei wirkt es sich besonders vorteilhaft aus, wenn ein Koppelmedium zwischen dem Substrat, auf dem die fluoreszierende Schicht(en) aufgebracht ist/sind und den Enden der Lichtleitfasern vorhanden ist, um Lichtverluste zu verringern.

Für verschiedenste Anwendungen ist es günstig, wenn zumindest ein Teil des Meßkopfes, und dabei zumindest der Teil, der die Lichtleitfasern aufnimmt, der in Richtung auf die fluoreszierende(n) Schicht(en) gerichtet ist, flexibel oder der obere Teil des Meßkopfes zumindest teilweise abgeknickt ist, ausgebildet ist.

Zur Verbesserung der optischen Eigenschaften der erfindungsgemäßen Vorrichtung ist es vorteilhaft zwischen der bzw. den Lichtquellen und den jeweils zugeordneten Lichtleitfasern ein Filter und/oder eine Einkoppeloptik anzuordnen, um einmal Lichtverluste zu vermeiden und zum anderen den Wellenlängenbereich, des Lichtes, das auf die jeweilige fluoreszierende Schicht gerichtet wird, einzugrenzen, so daß die Meßfehler weiter verringert werden können. Besonders günstig können die Filter gegen andere austauschbar sein, die für andere Wellenlängen, also andere fluoreszierende Stoffe und demzufolge auch andere zu detektierende Stoffe geeignet sind.

In gleicher Weise wirkt sich eine entsprechende Anordnung von Auskoppeloptiken und/oder Filtern vor den verschiedenen Detektoren aus.

In der erfindungsgemäßen Vorrichtung kann aber auch ein Bündel mehrerer Lichtleitfasern verwendet werden, wobei die einzelnen Lichtleitfasern in dem Bündel verschieden angeordnet sein können, um optimale Meßsignale von Fluoreszenzlicht erfassen zu können und reflektiertes Licht der Lichtquelle(n) außerdem Meßfehler minimierbar sind. Die Anordnung der einzelnen Lichtleitfasern in dem Bündel kann dabei in einer Variante ringförmig und in einer zweiten Variante sternförmig erfolgen.

Bei einer ringförmigen Anordnung können in einem äußeren Ring alternierend wechselnd nebeneinander Lichtleitfasern angeordnet sein, die einmal anregendes Licht auf die fluoreszierende Schicht und dort reflektiertes Licht als Referenzsignal auf einen Detektor richten. In einem zu diesem inneren Ring können dann Lichtleitfasern angeordnet sein, die Fluoreszenzlicht auf zumindest einen Detektor im Meßkopf richten. Im Zentrum des Ringes kann dann eine zusätzliche Lichtleitfaser angeordnet sein, die ebenfalls anregendes Licht auf die fluoreszierende Schicht richtet.

Bei einer sternförmigen Anordnung der einzelnen Lichtleitfasern ist es günstig, im Zentrum des Sternes eine Lichtleitfaser anzuordnen, durch die anregendes Licht auf die fluoreszierende Schicht gerichtet wird und sternförmig nebeneinander in einem alternierenden Wechsel Lichtleitfaser mit denen Referenzlicht und Fluoreszenzlicht auf Detektoren gerichtet wird, anzuordnen.

Die Anordnung der jeweiligen Lichtleitfasern für die verschiedenen Lichtarten, kann aber auch unter Berücksichtigung der Anordnung von verschiedenen fluoreszierenden Schichten gewählt werden, wobei z.B. eine teilkreisförmigen Anordnung der Lichtleitfasern gewählt werden kann, wenn die fluoreszierenden Schichten bevorzugt als Teilkreise ausgebildet sind und die lokale Zuordnung berücksichtigt wird.

In einer anderen Ausführungsform der erfindungsgemäßen Vorrichtung werden die einzelnen Lichtleitfasern jedoch nicht parallel angeordnet, sondern sie sind zumindest in ihren Endbereichen, d.h. in Richtung auf die fluoreszierende(n) Schicht(en) in bestimmten Winkeln zueinander geneigt, so daß beispielsweise das fluoreszenzanregende Licht in einem bestimmten Winkel der ungleich 90° ist, auf die fluoreszierende Schicht gerichtet wird und in einem zweiten entsprechend ausgerichteten Winkel zumindest eine Lichtleitfaser ausgerichtet ist, durch die das reflektierte Referenzlicht eintreten und auf einen Detektor gerichtet werden kann. Eine dritte Lichtleitfaser kann dann bevorzugt orthogonal zur fluoreszierenden Schicht angeordnet sein, durch die das Fluoreszenzlicht auf den entsprechenden Detektor gelangt.

Bei allen diesen Fällen ist es jedoch günstig, die Lichtleitfasern so anzuordnen und/oder auszurichten, daß ihre Stirnflächen zur Ein- bzw. Auskopplung von Anregungs- und Fluoreszenzlicht, eine lokale Zuordnung des gemessenen Fluoreszenzlichtes unter Berücksichtigung ihrer numerischen Aperturen ermöglicht.

Für bestimmte Anwendungen der erfindungsgemäßen Vorrichtung ist es günstig, wenn zumindest im oberen Meßkopfbereich eine Heizung vorhanden ist, mit der eine Kondensation von z.B. Wasser an der bzw. den fluoreszierenden Schicht(en) verhindert werden kann. Außerdem ist es günstig, unter Verwendung zumindest eines Temperatursensors und einer entsprechenden Steuerung oder Regelung die Heizung entsprechend den Umgebungsbedingungen, d.h. der Umgebungstemperatur und der Luftfeuchtigkeit, zu manipulieren und dadurch verschiedene vorgebbare Temperaturen im Bereich der fluoreszierenden Schicht(en) und/oder im oberen Meßkopfbereich einstellen zu können. Die Heizung kann dabei einmal im oberen Meßkopfbereich angeordnet sein, es besteht aber auch die Möglichkeit, entsprechende Heizelemente in unmittelbarer Nähe der fluoreszierenden Schicht(en) anzuordnen. Eine Möglichkeit hierfür ist die Anbringung der Heizung am Substrat, auf dem die fluoreszierende Schicht(en) aufgebracht ist/sind.

Die erfindungsgemäße Vorrichtung kann weiter verbessert werden, wenn der untere Bereich des Meßkopfes, gegenüber dem oberen beheizten Meßkopfbereich thermisch isoliert ausgebildet wird.

Für verschiedene Anwendungen kann es günstig sein, daß der obere Meßkopfbereich nicht nur flexibel, sondern auch allein oder in Verbindung mit einer flexiblen Ausführung verjüngend ausgebildet ist, wobei eine Verjüngung bis fast auf den Durchmesser der Lichtleitfasern möglich ist.

Je nach tatsächlicher Ausführung einer erfindungsgemäßen Meßvorrichtung ist es dann möglich, zumindest einen fluidischen Stoff zu detektieren, der ein gewisses quantifizierbares Maß an Fluoreszenzlöschung in der fluoreszierenden Schicht bewirkt. Dabei können verschiedene Stoffe mit verschiedenen fluoreszierenden Schichten, die nebeneinander angeordnet werden, detektiert werden. Es besteht aber auch die prinzipielle Möglichkeit, mehrere Stoffe dadurch zu detektieren, daß Licht verschiedener Wellenlänge auf nur eine fluoreszierende Schicht gerichtet und die Detektion wellenlängenaufgelöst durchgeführt wird.

Die erfindungsgemäße Vorrichtung muß trotz zumindest teilweise integrierter Auswerteelektronik klein und flexibel ausgebildet sein, so daß die verschiedensten Applikationen möglich sind. Insbesondere wirkt sich die schlanke und gegebenenfalls flexible Ausbildung des oberen Meßkopfbereiches dahingehend positiv aus, daß eine Ausrichtung zum Meßort bzw. zu der/den fluoreszierenden Schicht(en) einfach möglich ist.

Ein weiterer Vorteil besteht darin, daß die Lichtleitfasern ohne starre Verbindungen, wie z.B. optische Steckverbinder, eingesetzt werden können, so daß ein Austausch möglich wird, obwohl die Lichtleitfasern fixiert gehalten sind und so nicht mehr bewegt werden können, so daß ein Modemrauschen vermieden werden kann.

Werden mehrere Lichtleitfasern als Bündel eingesetzt, so können die verschiedensten Anordnungen am Ende des Meßkopfes in Richtung auf die fluoreszierende(n) Schicht(en) die optimalen Meßverhältnisse sichern und den Anteil von Streulicht verringern sowie ein Übersprechen von Anregungslicht stark minimieren und es kann dabei zusätzlich ein Referenzsignal erfaßt werden.

Durch die räumliche Trennung und zusätzliche thermische Isolation des oberen Meßkopfbereiches kann die Temperierung im Bereich der fluoreszierenden Schicht(en) in bezug auf den Energieverbrauch optimiert werden und es wird verhindert, daß der untere Bereich des Meßkopfes unnötig erwärmt wird.

Weitere Vorteile der Erfindung sind die besseren und effektivere Ausleuchtung der fluoreszierenden Schicht(en), geringerer Fremd- und Streulichteinfluß.

Mit der Erfindung können mehrere Stoffkonzentrationenen mittels verschiedenere Fluoreszenzfarbstoffen und/oder Rfeerenzsignale berücksichtigt werden. Ein selektives Anregen solcher Schichten und entsprechendes Erfassen ist möglich.

Die Temperierung bzw. Heizung kann nur in unmittelbarer Nähe der Schichten durchgeführt werden.

Es werden keine externen optischen Steckverbinder benötigt, die zu Kopplungsproblemen führen könnten benötigt.

Durch optische Trennung von Meßspitze und Meßwert erfassung und -auswertung ist eine Miniaturisierung, eine geringe Masse und außerdem ein flexibler ZUgang zum Meßmedium möglich.

Die erfindungsgemäße Vorrichtung ist nicht nur flexibel ausgestaltbar, sondern auch bei Herstellung und im Betrieb kostengünstig, da auch einige Teile kostengünstig durch Austausch ersetzt werden können.

Nachfolgend soll die Erfindung an Ausführungsbeispielen näher beschrieben werden.

Dabei zeigen:
- Figur 1: den schematischen Aufbau eines ersten Beispiels einer erfindungsgemäßen Vorrichtung;
- Figuren 2, 2a, 2b: verschiedene Anordnungen von Lichtleitfaserbündeln am oberen Meßkopf;
- Figuren 3, 3a, 3b: drei Beispiele eines erfindungsgemäßen Meßkopfes jeweils in zwei Ansichten;
- Figur 4: ein erstes Beispiel eines auf einen Meßkopf aufsetzbaren Trägers in zwei Ansichten;
- Figur 5: ein zweites Beispiel eines auf einen Meßkopf aufsetzbaren Trägers in zwei Ansichten;
- Figur 6: ein drittes Beispiel eines auf einen Meßkopf aufsetzbaren Trägers in zwei Ansichten;
- Figur 7: ein viertes Beispiel eines auf einen Meßkopf aufsetzbaren Trägers in zwei Ansichten;
- Figur 8: ein fünftes Beispiel eines auf einen Meßkopf aufsetzbaren Trägers in zwei Ansichten;
- Figur 9: einen Träger mit symmetrisch ausgebildeten planarem Lichtwellenleiter;
- Figur 10: zwei symmetrisch angeordnete Träger;
- Figur 11: Beispiele für die Ein- und Auskopplung von Licht in Stirnflächen von auf einen Meßkopf aufsetzbaren Trägern.
- Figur 12: ein sechstes Beispiel eines auf einem Meßkopf aufsetzbaren Trägers in zwei Ansichten;
- Figur 13: ein siebentes Beispiel eines auf einem Meßkopf aufsetzbaren Trägers in zwei Ansichten;
- Figur 14: ein achtes Beispiel eines auf einem Meßkopf aufsetzbaren Trägers in zwei Ansichten;
- Figur 15: ein neuntes Beispiel eines auf einem Meßkopf aufsetzbaren Trägers in zwei Ansichten;
- Figur 16: einen auf einen Meßkopf aufsetzbaren Körper;
- Figur 17: einen auf einen Meßkopf aufsetzbaren Körper;
- Figur 18: einen auf einen Meßkopf aufsetzbaren Körper;
- Figur 19: eine erste Halterung für Fluoreszenzschichten in drei Ansichten;
- Figur 20: eine zweite Halterung für Fluoreszenzschichten in drei Ansichten;
- Figur 21: einen Meßkopf zur wellenlängenaufgelösten Messung und
- Figur 22: einen weiteren Meßkopf in zwei Ansichten.

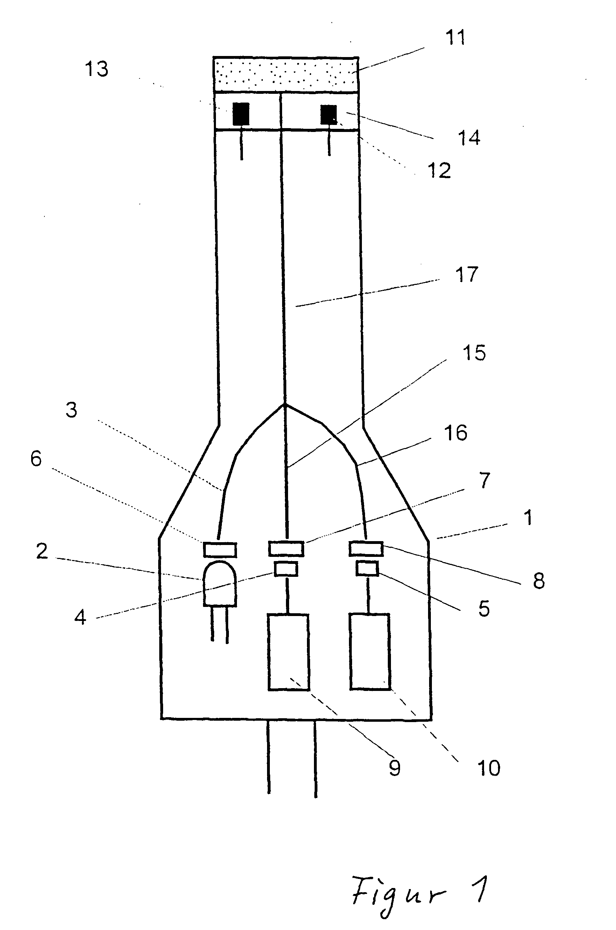

In der Figur 1 ist der schematische Aufbau eines ersten Ausführungsbeispieles einer erfindungsgemäßen Vorrichtung dargestellt.

Dabei ist in dem geschlossenen Meßkopf 1 zumindest eine Lichtquelle 2 aufgenommen, von der anregendes Licht über ein Filter 6, das bevorzugt ein auch austauschbares Bandfilter ist, durch die Lichtleitfaser 3, die durch den oberen Meßkopfbereich 17 geführt ist, auf eine fluoreszierende. Schicht 11 gerichtet wird. Durch eine zweite Lichtleitfaser 15 gelangt Fluoreszenzlicht von der fluoreszierenden Schicht 11 über ein ggf. ebenfalls austauschbaren Kantenfilter 6 auf einen Detektor 4 mit dem die Intensität des Fluoreszenzlichtes gemessen werden kann und der Detektor 4 mit einer Auswerteelektronik 9 verbunden ist.

Durch eine dritte Lichtleitfaser 16 gelangt dann reflektiertes Licht als Referenzsignal ebenfalls über einen Filter 8, der wieder austauschbar sein kann, auf einen zweiten Detektor 5, der mit einer zweiten Elektronik 10 verbunden ist.

Dabei soll der Austausch der Filter 6, 8 vorteilhaft von außen über Öffnungen mit einer Arretierung möglich sein.

Im obersten Bereich des oberen Meßkopfbereiches 17 ist dann eine Heizung 12 vorgesehen, die zur Verbesserung der Wärmeleitung in einer Metallspitze 14 eingefaßt ist, angeordnet. Zur Steuerung bzw. Regelung der Heizung 12 ist in der Metallspitze ebenfalls ein Temperatursensor 13 aufgenommen, dessen Meßsignal zu einer Steuerelektronik geführt wird, die dann die Heizleistung beeinflußt.

Am unteren Teil des Meßkopfes 1 deuten zwei Leitungen Verbindungen zu einer Auswerteelektronik an, die die vorverarbeiteten Signale aus der Elektronik 9 und 10 weiter verarbeiten kann bzw. zur Anzeige und Ausgabe bringt.

Selbstverständlich kann die Anzahl der Lichtquellen 2 der Detektoren 4 und 5 entsprechend vergrößert werden.

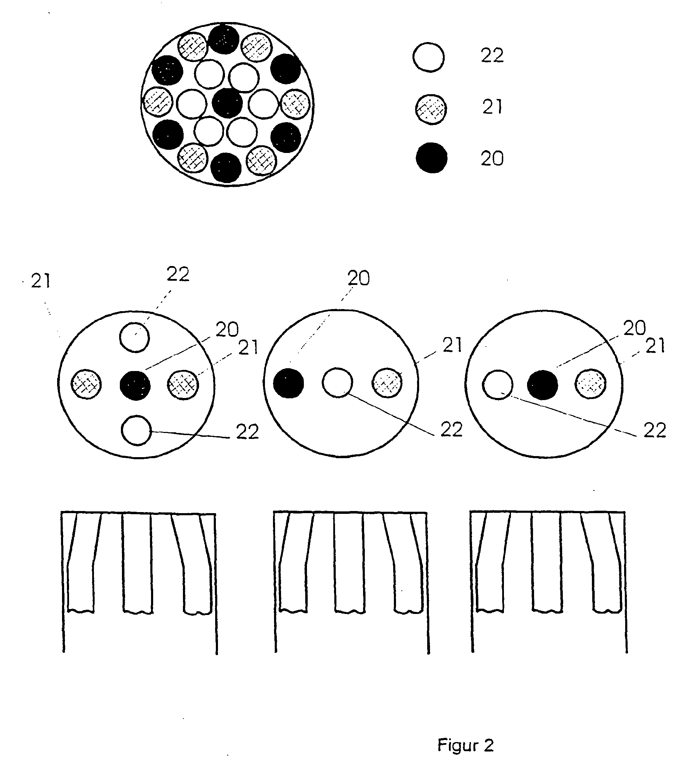

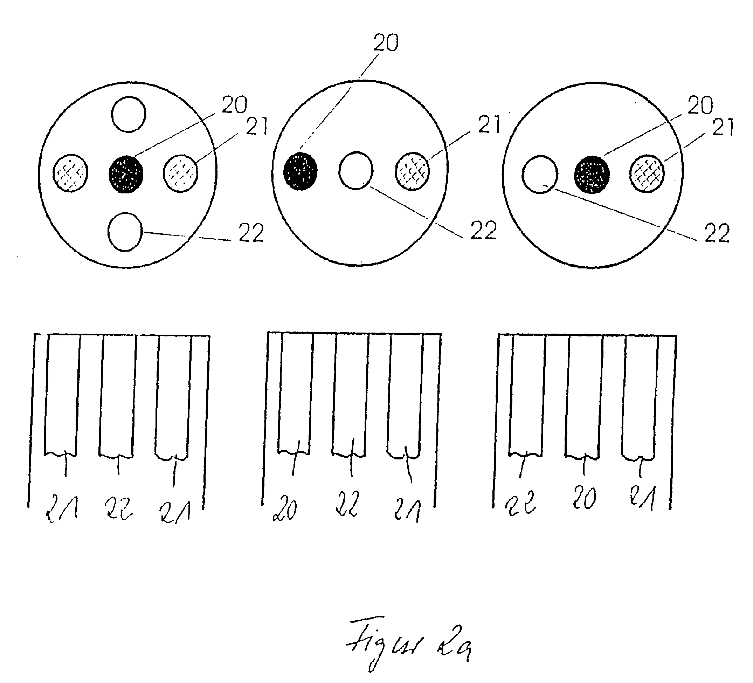

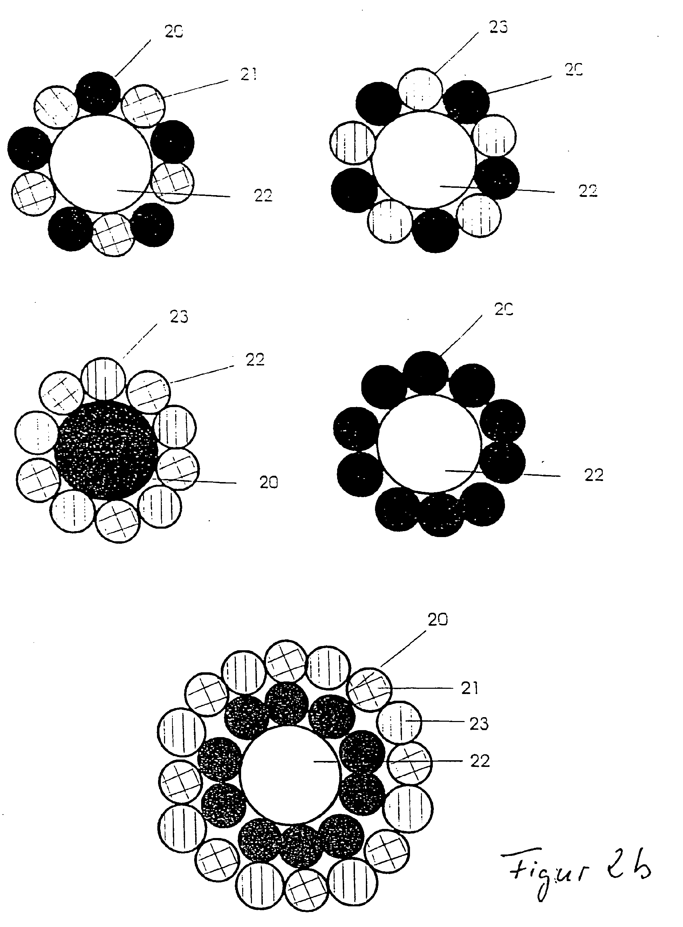

In den Figuren 2, 2a und 2b sind dann verschiedene Varianten für mögliche Anordnungen von verschiedenen Lichtleitfasern dargestellt. Dabei zeigt die obere Darstellung in Figur 2 ein Bündel verschiedener Lichtleitfasern, wobei die ausgefüllten Lichtleitfasern 20 Licht der Lichtquelle 2 auf die fluoreszierende Schicht richten. Die schraffierten Lichtleitfasern 21 richten das an der Schicht reflektierte Licht als Referenzsignal auf den Detektor 5 und die Lichtleitfasern 22, 23 Fluoreszenzlicht von der bzw. den fluoreszierenden Schicht(en) auf einen bzw. mehreren Detektor(en) 4.

In den unteren linken und mittleren Darstellungen sind verschiedene Anordnungen von drei Lichtleitfasern dargestellt, wobei die jeweilige Funktion der bereits bei der oberen Darstellung erklärten, entspricht. In der unteren rechten Darstellung ist eine sternförmige Anordnung von Lichtleitfasern wiedergegeben, bei der eine zentrale Lichtleitfaser 20 für anregendes Licht und im alternierenden Wechsel um die mittlere Lichtleitfaser 20 Lichtleitfasern 21 und 22 angeordnet sind, wobei die Anzahl der sternförmig angeordneten Lichtleitfasern 21 und 22 ohne weiteres erhöht sein kann.

In den unteren Darstellungen der Figur 2 ist weiter die Führung der verschiedenen Lichtleitfasern 20, 21 und 22 im oberen Meßkopfbereich 17 in bevorzugter Form dargestellt. Dabei werden verschiedene Lichtleitfasern insbesondere im äußeren Bereich angeordnet, abgewinkelt ausgebildet, so daß eine verbesserte Ausleuchtung der fluoreszierenden Schicht und eine Verringerung von Fremd- und Streulichteinfluß erreicht werden kann.

Die in der Figur 2 dargestellten Beispiele sind jedoch nicht nur auf eine Ausführung eines erfindungsgemäßen Meßkopfes beschränkt, bei dem lediglich eine fluoreszierende Schicht verwendet wird. Werden mehrere verschiedene fluoreszierenden Schichten am erfindungsgemäßen Meßkopf verwendet, kann auf einfache Weise eine lokale Zuordnung der verschiedenen für die Messung erforderlichen Lichtleitfasern erfolgen, so daß für die verschiedenen Fluoreszenz- und Referenzsignale jeweils optimale Verhältnisse erhalten werden können.

In jedem Fall können die Lichtleitfasern 22 jedoch so angeordnet und/oder ausgerichtet werden, daß auch unter Berücksichtigung der eigenen und der numerischen Aperturen der Lichtleitfasern 20 für Anregungslicht lokal definierte Bereiche in der Schicht bzw. den Schichten detektiert werden können.

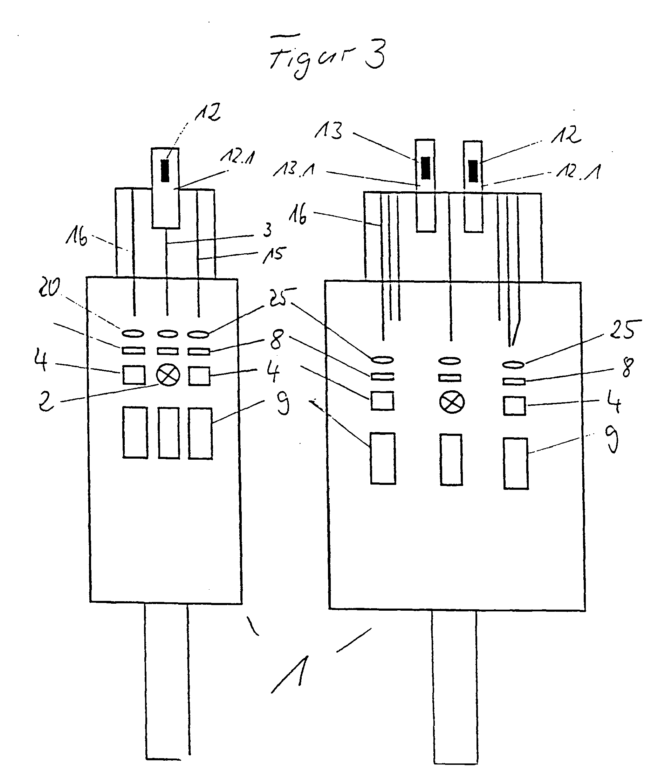

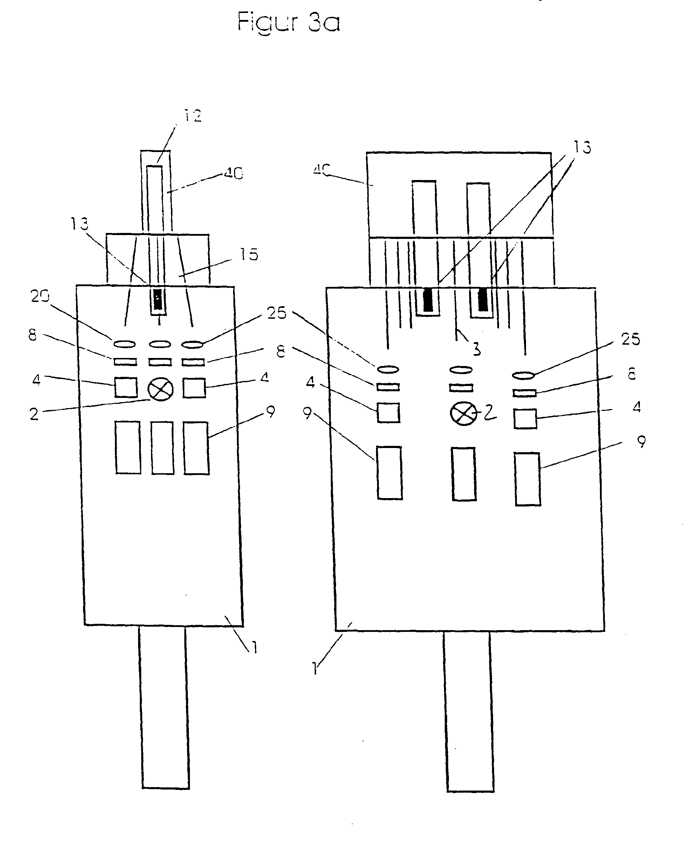

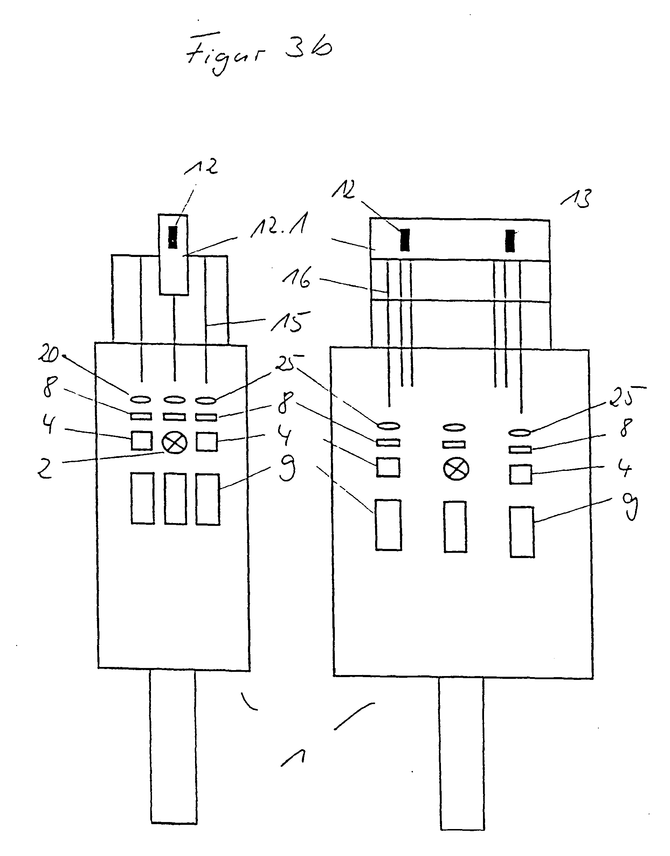

In der Figur 3 ist ein zweites Beispiel eines erfindungsgemäßen Meßkopfes 1 in zwei Ansichten dargestellt, aus denen hervorgeht, daß ein solcher Meßkopf eine kleinere Breite im Verhältnis zu seiner Länge hat und dadurch insbesondere für die Messung in strömenden Medien günstige Voraussetzungen bietet, als dies mit beispielsweise kreisrunden oder quadratischen Formen der Fall ist, da die Strömungsbedingungen und demzufolge auch das Meßergebnis durch z.B. hervorgerufene Turbulenzen, höheren Strömungsgeschwindigkeiten oder Druckanstiegen negativ beeinflußt werden können.

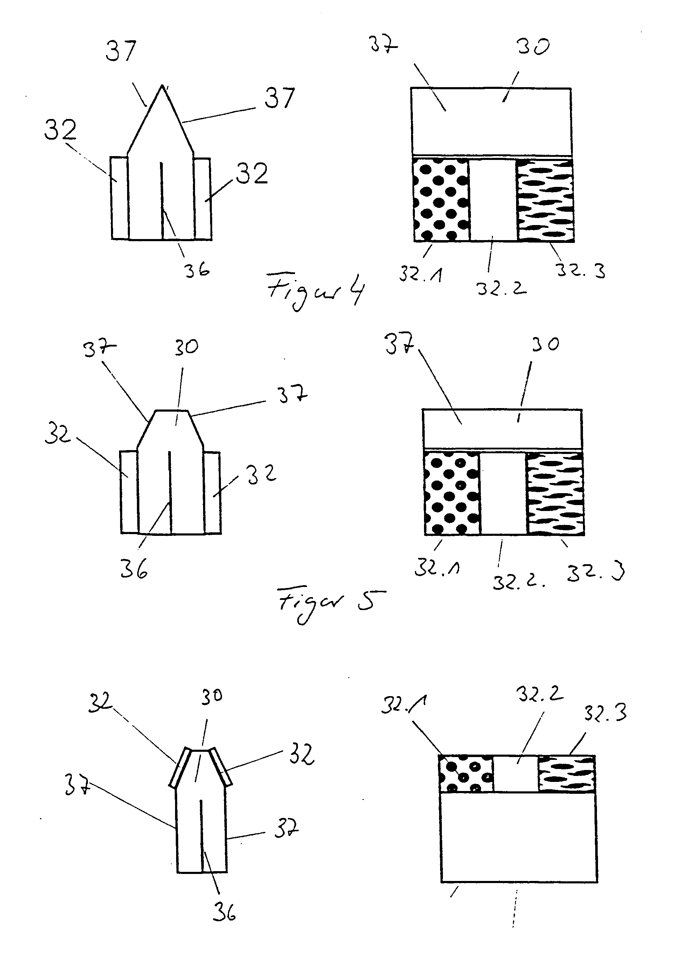

Auf einen solchen Meßkopf 1 können dann austauschbare Träger, für die einige Beispiele in den nachfolgenden noch zu beschreibenden Figuren 4 bis 15 dargestellt sind, aufgesetzt werden.

Wie dies in der Figur 3 zum Ausdruck kommt, können Lichtleitfasern 3, 15, 16 in Reihenanordnungen sich paarweise gegenüberliegend angeordnet sein, wobei die Reihen parallel zur Längsachse eines solchen Meßkopfes ausgerichtet sind.

Dabei können in einer Reihe ausschließlich Lichtleitfasern 3 für anregendes Licht und in der gegenüberliegenden Reihe ausschließlich Lichtleitfasern 15, 16 für Fluoreszenzlicht oder zumindest in einer Reihe eine alternierende Anordnung von Lichtleitfasern 3 für anregendes Licht und Lichtleitfasern 15, 16 für Fluoreszenzlicht angeordnet werden.

Im Meßkopf 1 sind wieder die Lichtquellen 2, bevorzugt austauschbare Filter 6 und 8, Ein- bzw. Auskoppeloptiken 25, Detektoren 4 sowie die entsprechende Auswerte- und Steuerelektronik 9 untergebracht.

In der Figur 3 sind außerdem Temperatursensoren 13 und Heizelemente 12 dargestellt, die aus dem oberen Sockel des Meßkopfes 1 stiftförmig oder in anderer geeigneter Form herausragen, so daß sie in Verbindung mit entsprechend ausgebildeten Aufnahmebohrungen in den noch zu beschreibenden Trägern 30 oder Körpern 40 durch Formschluß positioniert und fixiert werden können.

Die Träger 30 oder Körper 40 können, auf die im übrigen plane Oberfläche des Sockels mittels eines optischen Kittes aufgesetzt werden.

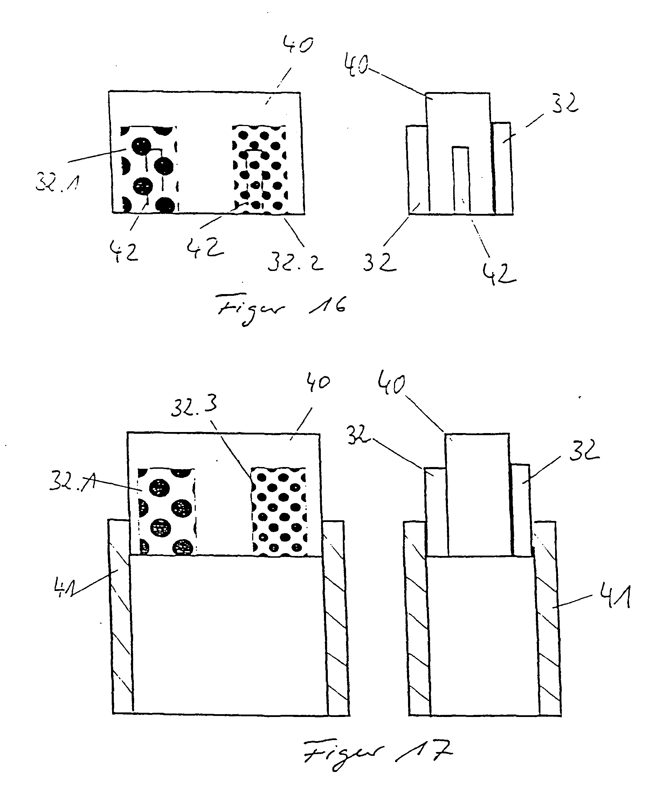

In der Figur 3a ist ein Meßkopf 1 mit einem aufgesetzten Körper 40 gemäß Figur 16 in der rechten Darstellung erkennbar.

Die Figur 3b zeigt ein Beispiel eines Meßkopfes 1 auf den wieder Träger 30 oder Körper 40 aufgesetzt werden können. Das eine bzw. mehrere Heizelement(e) 12 können mit einem Material 12.1 mit guter Wärmeleitung umgeben sein.

In der Figur 4 ist ein erstes Beispiel für einen auf einen Meßkopf 1, wie in Figur 3 dargestellt, aufsetzbaren Träger 30, aus einem optisch transparenten Material, in zwei verschiedenen Ansichten dargestellt.

Hierbei ist zu beachten, daß, wie dies auch für die folgenden Figurendarstellungen 5 bis 13 zutrifft, die Größenverhältnisse nicht den tatsächlichen entsprechen, sondern für ein einfacheres und besseres Verständnis, die Breite wesentlich größer dargestellt ist, als dies in einer praktischen Ausbildung der Fall ist und im Einsatz in strömenden fluidischen Medien die Breite eines solchen Trägers 30 im Verhältnis zu seiner Länge wesentlich geringer ist, so daß der Strömungswiderstand entsprechend klein gehalten wird.

Der Träger 30 gemäß Figur 4, besteht aus zwei Schenkeln 30', 30", die zumindest teilweise durch eine zwischenliegende, bevorzugt reflektierende Schicht 36 optisch voneinander getrennt sind.

Bei diesem Beispiel sind fluoreszierende Stoffe enthaltende Schichten 32 an beiden Außenseiten des Trägers 30 aufgebracht und die übrigen äußeren Flächen 37 ebenfalls reflektierend ausgebildet bzw. beschichtet.

Das Anregungslicht wird nunmehr über Lichtleitfasern 3 in zumindest eine der beiden Stirnflächen der Schenkel 30', 30" in den transparenten Träger 30 eingestrahlt und dort durch mehrfache Reflexion die Fluoreszenz in den Schichten 32 angeregt. Ein Teil des Fluoreszenzlichtes wird wieder in den Träger 30 eingestrahlt und durch Reflexion an den äußeren Flächen des Trägers 30 durch die unteren Stirnflächen des einen bzw. der beiden Schenkel 30', 30" auf Lichtleitfasern 15, 16 für Fluoreszenzlicht gerichtet und die Intensität des Fluoreszenzlichtes mit Detektoren 4 erfaßt und demzufolge die Stoffkonzentration infolge Fluoreszenzlöschung gemessen werden kann.

In der linken Darstellung der Figur 4 ist außerdem erkennbar, daß sich die oberen Grenzflächen des Trägers 30 in einem Winkel geneigt zueinander ausgebildet sind, wobei der Winkel so gewählt wird, daß entsprechend der verwendeten Wellenlängen optimale Reflexionsverhältnisse erreicht werden können.

In der rechten Darstellung der Figur 4 ist eine Ansicht orthogonal zur Längsachse eines solchen Trägers 30 dargestellt, aus der erkennbar ist, daß mehrere Bereiche durch beispielsweise reflektierende Schichten 38 optisch voneinander getrennt sein können (auch bei den folgenden Beispielen möglich) und in den Bereichen verschiedene Schichten 32.1, 32.2 und 32.3 aufgebracht bzw. ausgebildet sind. Mit diesen verschiedenen Schichten 32.1 bis 32.3 besteht die Möglichkeit, mit einem erfindungsgemäßen Meßkopf 1 gleichzeitig mehrere Stoffkonzentrationen zu bestimmen und/oder zumindest eine Referenzmessung in einem dieser Bereiche durchzuführen. Bei dem nachfolgenden Figuren werden für gleiche Elemente die gleichen Bezugszeichen verwendet.

In der Figur 5 ist eine weitere Variante eines Trägers 30 dargestellt, wobei sich dieser vom vorhergehend beschriebenen lediglich in der oberen Kontur unterscheidet.

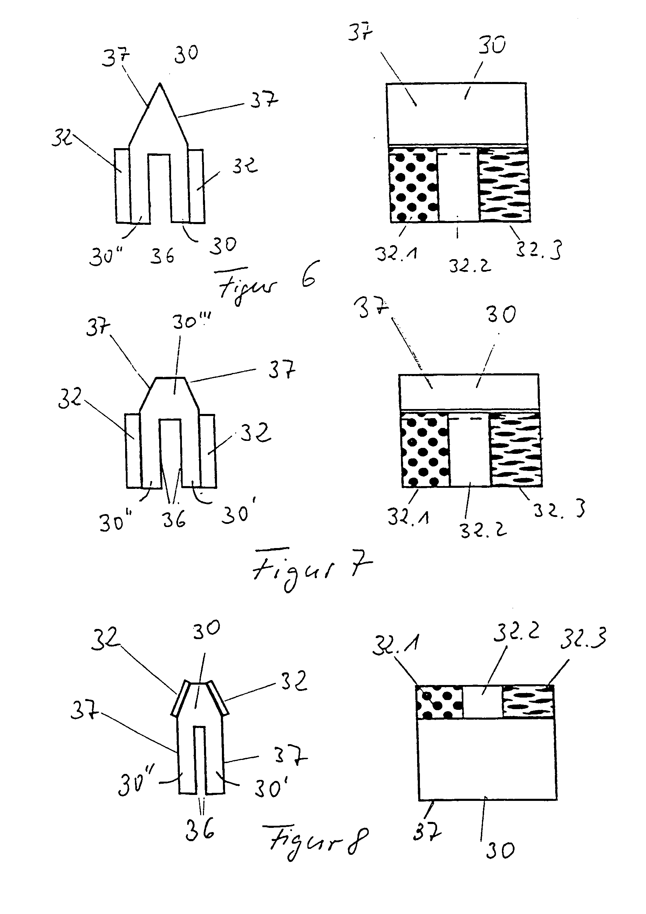

Das in der Figur 6, ebenfalls in zwei Ansichten dargestellte Beispiel eines auf einen erfindungsgemäßen Meßkopf 1 aufsetzbaren Trägers 30 entspricht in wesentlichen Teilen, dem bereits bei der Beschreibung der Figur 4 erwähnten Träger 30.

Lediglich zwischen den Schenkeln 30' und 30" ist ein über die gesamte Länge des Trägers 30 reichender Hohlraum oder eine oder mehrere Durchbrechungen ausgebildet, deren Oberflächen wieder mit einer reflektierenden Beschichtung 36 versehen sind, ausgebildet.

Mit diesem Hohlraum bzw. der/den Durchbrechung(en) kann eine formschlüssige Befestigung auf dem Meßkopf 1 erreicht werden.

Hierzu ist ein entsprechender Längssteg an der Oberfläche des Meßkopfes 1 ausgebildet, der formschlüssig in den im Träger 30 ausgebildeten Hohlraum eingreifen und diesen entsprechend halten kann.

Werden eine oder mehrere Durchbrechungen im Träger 30 ausgebildet, so können die entsprechend geformten und konturierten Heizelemente 12 bzw. Temperatursensoren 13 oder andere z.B. stiftförmige Elemente ohne weitere Funktion, ausschließlich für die Befestigung eines solchen Trägers 30 auf dem Meßkopf 1 ausgebildet, in die Durchbrechungen bzw. Hohlräumen formschlüssig eingeführt und dort entsprechend befestigt gehalten werden.

Der in der Figur 7 ebenfalls in zwei Ansichten dargestellte Träger 30 unterscheidet sich vom in Figur 6 gezeigten Träger 30 wiederum lediglich durch die stegartige Abflachung im oberen Bereich.

Bei dem in der Figur 8 dargestellten Träger 30 sind die fluoreszierende Stoffe enthaltenden Schichten 32 im geneigten oberen Bereich aufgebracht, so daß sie nicht parallel zueinander ausgerichtet, sondern gegeneinander geneigt sind.

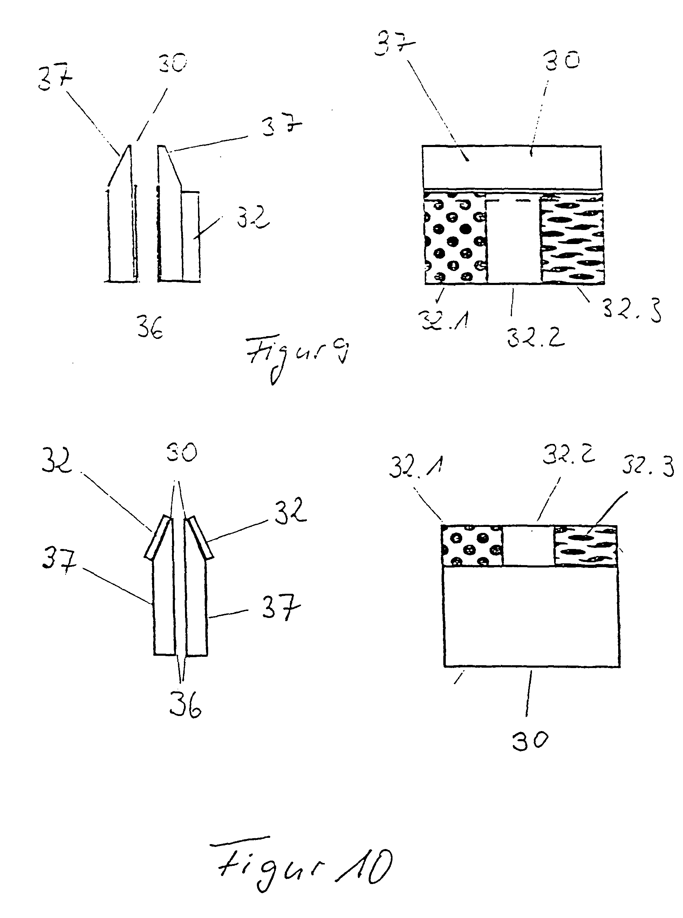

Bei dem in der Figur 9 dargestellten Beispiel eines Trägers 30 wurde eine besondere Bauform gewählt. Dabei wird lediglich ein Träger 30, auf dem eine oder mehrere fluoreszierende Stoffe enthaltende Schicht(en) 32.1 bis 32.3 aufgebracht sind, verwendet und in einem Abstand zu diesem, ein ansonsten symmetrisch ausgebildeter planarer Lichtwellenleiter 35 verwendet, die beide oberhalb der fluoreszierende Stoffe enthaltenden Schicht(en) 32 eine in einem Winkel geneigte Fläche haben, an der sowohl das Anregungs-, wie auch das Fluoreszenzlicht reflektiert wird. Bei diesem Beispiel wird Anregungslicht ausschließlich in die untere Stirnfläche des Trägers 30 eingekoppelt und in diesem reflektiert, so daß Fluoreszenz in der/den Schicht(en) 32 angeregt wird. Da die sich gegenüberliegenden Flächen des Trägers 30 und des planaren Lichtwellenleiters 35 nur im unteren Teil reflektierend ausgebildet bzw. beschichtet sind, kann zumindest ein Teil des Fluoreszenzlichtes durch Reflexion an der geneigten Fläche des Trägers 30 in den planaren Lichtwellenleiter 35 gelangen und aus dessen unterer Stirnfläche über die entsprechend angeordneten Lichtleitfasern auf die Detektoren zur Messung der Fluoreszenzintensität gerichtet werden.

Anstelle der reflektierenden Schichten 36 kann aber auch ein niedriger brechendes Medium in den Zwischenraum gleichwirkend eingebracht werden, wobei dieser Sachverhalt auch für die Beispiele nach Figur 6 bis 8 zutrifft.

Außerdem besteht die Möglichkeit, anstelle des planaren Lichtwellenleiters 35 einen zweiten Träger 30 zu verwenden, so daß eine symmetrische Anordnung erreicht werden kann, wobei dann auch die Aufbringung von unterschiedlichen Schichten 32 hierbei möglich ist.

Bei dem in der Figur 10 dargestellten Beispiel sind im Gegensatz, z.B. entsprechend Figur 9, die fluoreszierende Stoffe enthaltenden Schichten 32 im oberen, geneigten Bereich der Träger 30 ausgebildet bzw. aufgebracht.

Bei den in den Figuren 4 bis Figur 15 dargestellten Trägern 30, können die fluoreszierende Stoffe enthaltenden Schichten 32 unmittelbar auf die entsprechenden Oberflächen der Träger 30 aufgebracht sein. In einer anderen Variante können jedoch die fluoreszierenden Stoffe enthaltenden Schichten 32 vorab auf einem bevorzugt plattenförmigen transparenten Substrat aufgebracht und im Nachgang dazu auf dem jeweiligen Träger 30 am jeweiligen Ort befestigt werden, wobei hierfür mechanisch wirkende form- und/oder kraftschlüssige Verbindungen allein oder in Verbindung mit einem optisch geeigneten Bindemittel bzw. ein solches Bindemittel allein verwendet werden können.

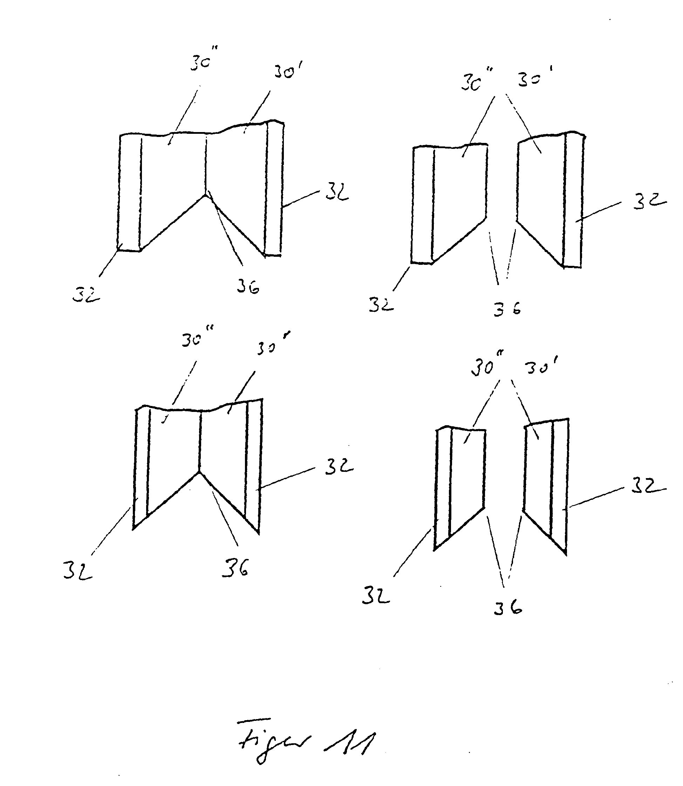

In der Figur 11 sind mögliche Varianten der Ausbildung von Stirnflächen der Träger 30 bzw. des planaren Lichtwellenleiters 35, in die das Anregungslicht ein- bzw. das Fluoreszenzlicht ausgekoppelt werden können, dargestellt, wobei bei allen diesen Beispielen diese Stirnflächen entsprechend geneigt sind, so daß die Reflexion in den Schenkeln 30', 30" der Träger 30 einmal für die Anregung der Fluoreszenz und zum anderen für die Ausrichtung des zu messenden Fluoreszenzlichtes optimiert werden können.

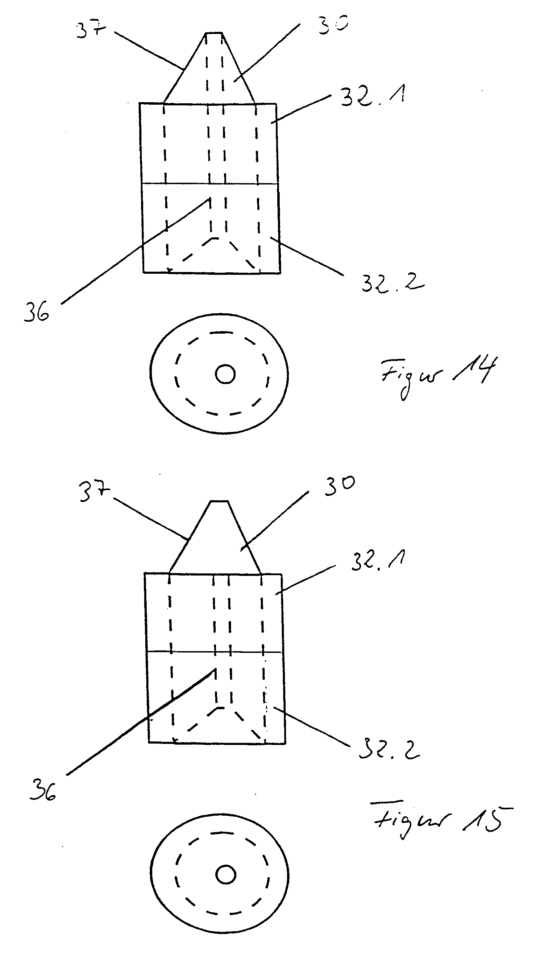

In diesen Fällen muß der obere Teil des Meßkopfes 1 auf den ein solcher Träger 30 aufgesetzt werden soll komplementär geformt sein, um optische Verluste zu vermeiden. Gleiches trifft auch auf die Träger 30 der Beispiele nach den Figuren 14 und 15 zu.

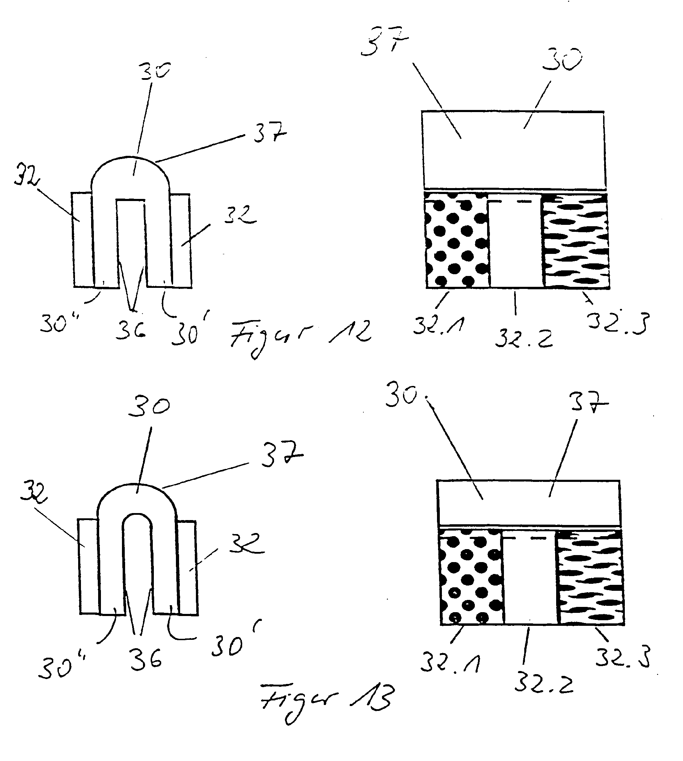

Die Figuren 12 und 13 zeigen weitere Möglichkeiten, wie ein Träger 30 ausgebildet sein kann, wobei hier nur geringfügig modifizierte U-Formen beispielhaft dargestellt worden sind.

Die Figuren 14 und 15 zeigen rotationssymmetrische Träger 30, deren oberer Teil kegelförmig ausgebildet ist und bei denen die fluoreszierenden Stoffe enthaltenden Schichten 32.1 und 32.2 kreisringförmig um den äußeren Mantel des Trägers 30, gegebenenfalls auf einem zusätzlichen entsprechend ausgebildeten Träger oder unmittelbar auf der Oberfläche angeordnet bzw. ausgebildet sind.

Die beiden Beispiele der Figuren 14 und 15 unterscheiden sich lediglich durch die Ausbildung der reflektierenden Beschichtung 36. Bei beiden Beispielen wird das Licht durch kegelförmig eingearbeitete Stirnflächen in den Träger 30 ein- und ausgekoppelt.

In der Figur 16 ist ein Körper 40 aus einem optisch streuenden Material, wie z.B. mit Titanoxid, Aluminiumoxid oder Zirkonoxid gefülltes Polyester dargestellt, auf den wiederum fluoreszierende Stoffe enthaltende Schichten 32.1 und 32.2 unmittelbar bzw. auf einem flächigen Substrat aufgebracht sind.

Ein solcher Körper 40, der auch als Diffusorplatte bezeichnet werden kann, kann Durchbrechungen bzw. Hohlräume 42 aufweisen, die so dimensioniert und angeordnet sind, daß der Körper 40 auf einen Meßkopf 1, wie er z.B. in Figur 3 dargestellt ist, aufgesetzt werden kann. In diesem Fall wird das Anregungslicht über die Lichtleitfaser 3 in den Körper 40 gestrahlt und dort diffus verteilt und so eine gleichmäßige Anregung von Fluoreszenz in den Schichten 32 erreicht und zumindest ein Teil des Fluoreszenzlichtes wieder in den Körper 40 gerichtet und von dort in die Lichtleitfasern 16 und 15 auf die Detektoren 4 zur Messung der Fluoreszenzintensität gerichtet.

Es ist auch möglich, das das Fluorszenzlicht aus einer Stirnfläche der Schicht(en) 32 in die Lichtleitfasern 15, 16 eingekoppelt und so auf den bzw. die Detektor(en) 4, 5 gerichtet werden kann.

Ein solcher Körper 40 kann aber auch aus einem optisch transparenten Material bestehen, das an den freiliegenden Oberflächen mit einer reflektierenden Beschichtung versehen ist und im Bereich der fluoreszierende Stoffe enthaltenden Schichten 32, die Oberfläche des Körpers 40 optisch streuend, ausgebildet ist.

In der Figur 17 ist eine Kappe 14 mit einem Körper 40, der wiederum so ausgebildet sein kann, wie dies bereits bei der Beschreibung der Figur 16 dargelegt worden ist, aufnimmt und an dem Körper 40 wiederum mindestens eine einen fluoreszierenden Stoff enthaltende Schicht 32 angeordnet oder dort ausgebildet ist. Die Kappe 41 kann dann auf einen Meßkopf 1, wie er z.B. in der Figur 1 dargestellt worden ist, aufgesetzt werden, wobei die Anordnung und Ausrichtung der Lichtleitfasern 15 und 16 für das Fluoreszenzlicht entsprechend der der jeweiligen Schichten 32.1 oder 32.3 erfolgen sollte.

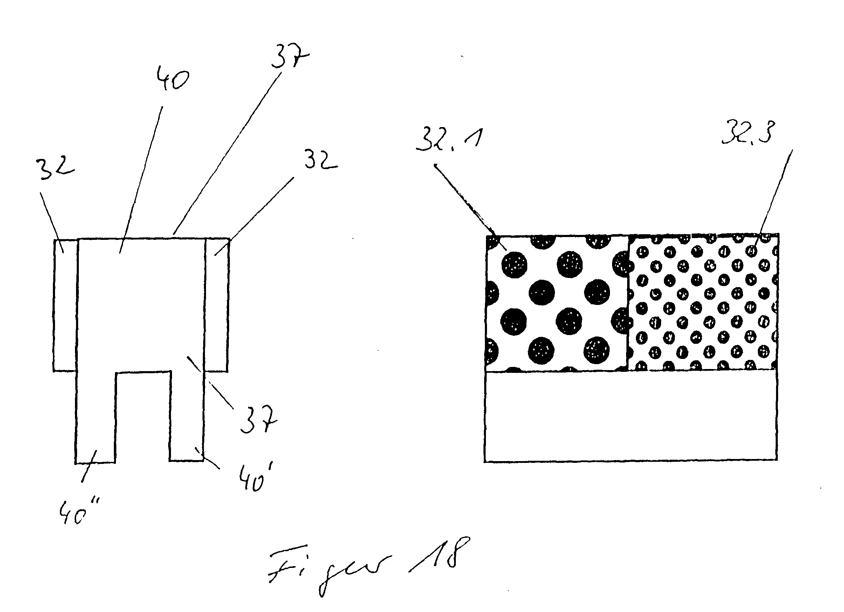

In der Figur 18 ist ein weiteres Beispiel für einen Körper 40, der bereits, wie oben genannt, ausgebildet sein kann, dargestellt.

Ein solcher Körper 40 kann wiederum einfach als Austauschteil, wie dies auch für die Kappe 41 gemäß Figur 17 und den Körper 40 gemäß Figur 16 der Fall ist, auf einfache Art und Weise zur Verfügung gestellt werden.

Wird nun der Körper 40 nach Figur 18, wie dies auch in Figur 3a dargestellt ist, auf einen Meßkopf 1 aufgesetzt, gelangt das Licht der Lichtquelle 2 relativ genau in der Mitte des Körpers 40 in diesen hinein, wird dort diffus gestreut und Fluoreszenz in den Schichten 32.1 und 32.3 nahezu gleichmäßig angeregt. Das in den Körper 40 zurückgestrahlte Fluoreszenzlicht gelangt über die Schenkel 40' und 40" des Körpers 40 und die Lichtleitfasern 15 über eine Optik 25 auf einen Fotodetektor 4, wobei vor diesem ein optisches Filter 8 angeordnet sein kann und die Auswertung der Meßsignale wird mit der im Meßkopf 1 integrierten Elektronik 9 durchgeführt.

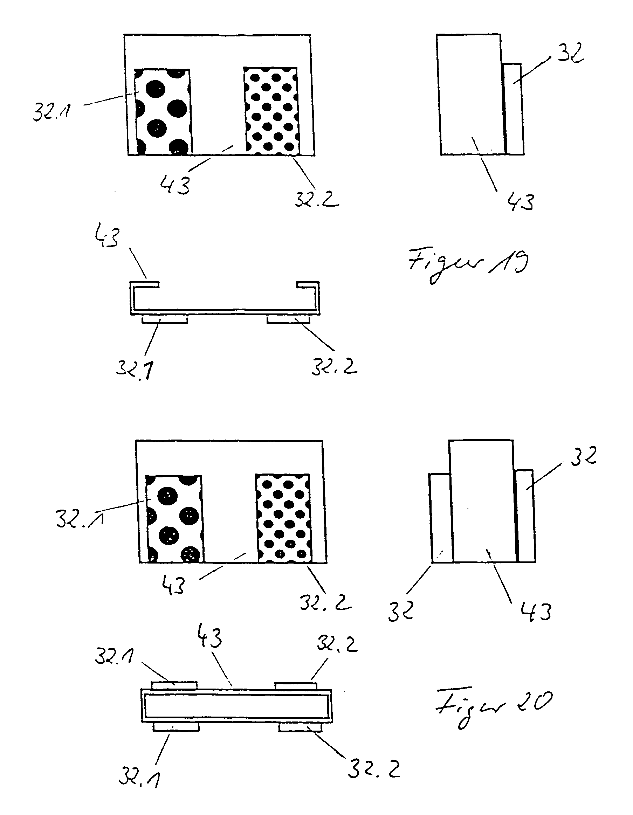

In den Figuren 19 und 20 sind zwei Beispiele für Halterungen 43 dargestellt, an denen fluoreszierende Stoffe enthaltende Schichten 32.1 und 32.2 befestigt werden können. Bevorzugt sind diese Schichten 32.1 und 32.2 auf einem ebenen, flächigen transparenten Substrat aufgebracht, das an der Halterung 43 formschlüssig und/oder mit einem Bindemittel befestigt werden kann.

Eine so vorbereitete Halterung 43 kann dann ohne weiteres z.B. auf einen Körper 40, der gegebenenfalls fester Bestandteil eines Meßkopfes 1, wie er in Figur 3a dargestellt ist, sein kann, aufgesetzt und befestigt werden.

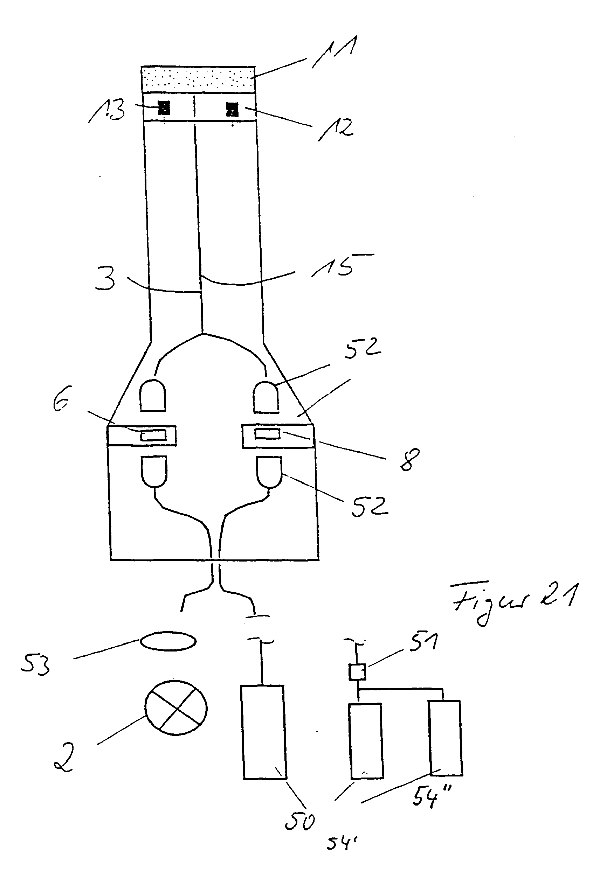

In der Figur 21 ist ein weiteres Beispiel eines erfindungsgemäßen Meßkopfes 1 dargestellt, an dessen oberer Spitze wiederum eine Schicht 11, in der mindestens ein fluoreszierender Stoff enthalten ist, angeordnet ist. Unterhalb dieser Schicht 11 ist wiederum ein Temperatursensor 13 und ein Heizelement 12 angeordnet, um bei Bedarf eine Kondensatbildung auf der Schicht 11 zu verhindern.

Das Anregungslicht wird wieder ausgehend von der Lichtquelle 2 über eine Optik 53, ein austauschbares Filter 6 in eine Lichtleitfaser 3 eingekoppelt und auf die Schicht 11 gerichtet. Das angeregte Fluoreszenzlicht gelangt über die Lichtleitfaser 15, die Optiken 52, den austauschbaren Filter 8 zur wellenlängenaufgelösten Messung in ein Spektrometer 50 oder über einen Optokoppler 51 zu verschiedenen Detektoren 54' und 54".

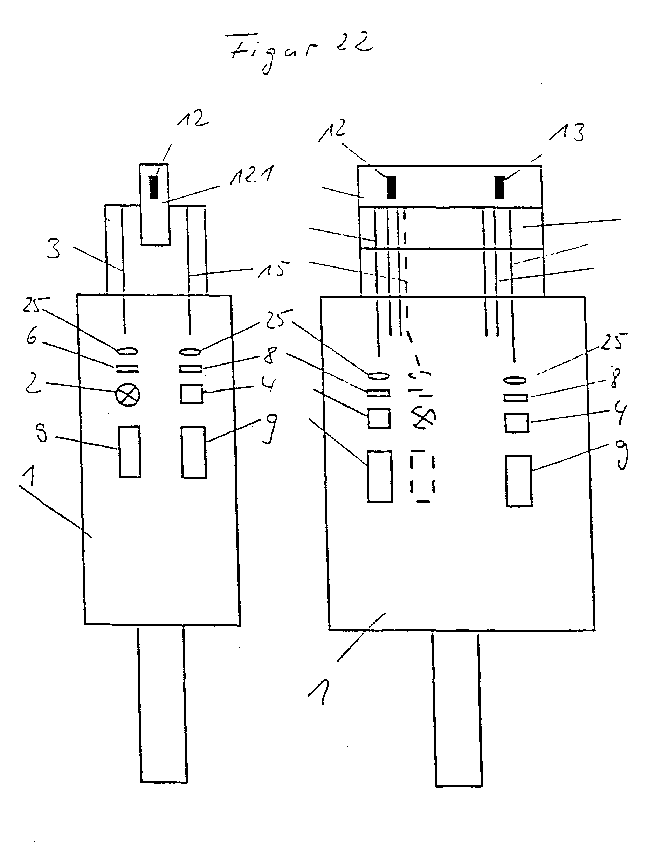

In der Figur 22 ist ein weiteres Beispiel eines erfindungsgemäßen Meßkopfes 1 in zwei Ansichten dargestellt. Dabei wird das anregende Licht der Lichtquelle 2 nur auf einer Seite in einen Schenkel 30' oder 30" eines Trägers 30, wie er in den Figuren 4 bis 15 dargestellt ist, eingekoppelt und aus dem jeweils anderen Schenkel 30' oder 30" oder beiden Schenkeln 30' und 30" wieder ausgekoppelt und auf Detektoren 4 zur Bestimmung der Fluoreszenzintensität gerichtet werden.

## Patentansprüche

1. Vorrichtung zur Messung von durch Licht angeregter Fluoreszenz, die mindestens eine, auf einem Träger (14, 30) aufgebrachte, einer fluoreszierenden Stoff enthaltende Schicht (11, 32) aufweist, mit mindestens einer Lichtquelle (2), die Licht mindestens einer Wellenlänge, die Fluoreszenz(en) in der/den Schicht(en) (11, 32) anregt/anregen, aussendet,
das durch mindestens einen ersten Lichtwellenleiter (3, 15, 16, 18) durch den Träger (14, 30) auf die Schicht(en) (11) gerichtet ist,
das Fluoreszenzlicht durch zumindest einen zweiten Lichtwellenleiter (15) auf mindestens einen Detektor (4) zur Bestimmung der Intensität des Fluoreszenzlichtes gerichtet ist,
**dadurch gekennzeichnet, daß**
die Stirnflächen sämtlicher Lichtwellenleiter (3, 15, 16, 20, 21, 22, 23), unter Berücksichtigung ihrer numerischen Aperturen, zueinander und/oder in bezug zu mindestens einer einen fluoreszierender Stoff enthaltenden, auf dem Träger (14, 30) aufgebrachten Schicht (11, 32) angeordnet und
als Bündel ringförmig angeordneter Lichtwellenleiter (20, 21, 22) mit einem im Inneren des Ringes angeordneten Lichtwellenleiter (20, 22) für anregendes Licht oder für Fluoreszenzlicht oder mehrere Lichtwellenleiter (3, 15, 16) in sich paarweise gegenüberliegenden Reihenanordnungen so angeordnet sind,
daß eine lokale Zuordnung der meßbaren Fluoreszenzintensität erreichbar ist und die Lichtquelle(n) (2), Lichtwellenleiter (3, 15, 16, 18, 20, 22, 31, 33) und der/die Detektor(en) (4, 5) in einem Meßkopf (1) aufgenommen sind.

2. Vorrichtung nach Anspruch 1, **dadurch gekennzeichnet, daß** zumindest der Teil des Meßkopfes (17), der das/die äußere(n) Ende(n) der Lichtwellenleiter (3, 15, 16, 18) aufnimmt, flexibel ausgebildet ist.

3. Vorrichtung nach Anspruch 1 oder 2, **dadurch gekennzeichnet, daß** der obere Meßkopfbereich 17 zumindest teilweise abgeknickt ist.

4. Vorrichtung nach einem der Ansprüche 1 bis 3, **dadurch gekennzeichnet, daß** zwischen Lichtqelle (2) und Lichtwellenleiter (3, 18) und/oder zwischen Detektor (4) und Lichtwellenleiter (15, 18) jeweils ein Filter (7, 8), ein System austauschbarer Filter und/oder eine Einkoppeloptik (20) angeordnet ist/sind.

5. Vorrichtung nach einem der Ansprüche 1 bis 4, **dadurch gekennzeichnet, daß** mehrere Lichtwellenleiter (20, 21, 22) am zur/zu fluoreszierenden Schicht(en) weisenden Meßkopfende (17) ringförmig, teilkreisförmig und/oder sternförmig angeordnet sind.

6. Vorrichtung nach Anspruch 5, **dadurch gekennzeichnet, daß** in einem äußeren Ring alternierend Lichtwellenleiter (20) für anregendes Licht und Referenzlicht (21) oder ein weiteres Fluoreszenzlicht und in einem inneren Ring Lichtwellenleiter (22) für Fluoreszenzlicht angeordnet sind.

7. Vorrichtung nach einem der Ansprüche 1 bis 6, **dadurch gekennzeichnet, daß** die Lichtwellenleiter (3, 15, 16, 20, 21, 22) für anregendes Licht, Fluoreszenzlicht und Referenzlicht oder ein weiteres Fluoreszenzlicht mit ihren zur fluoreszierenden Schicht weisenden Enden in verschiedenen Winkeln geneigt sind.

8. Vorrichtung nach einem der Ansprüche 1 bis 7, **dadurch gekennzeichnet, daß** am oberen Meßkopfbereich eine Heizung (12) mit einem Temperatursensor (13) und einer im Meßkopf angeordneten Steuerung oder Regelung, eine vorgebbare Temperatur an der/den fluoreszierenden Schicht(en) (11) und/oder am oberen Meßkopfbereich (17) einhaltend, angeordnet ist.

9. Vorrichtung nach einem der Ansprüche 1 bis 8, **dadurch gekennzeichnet, daß** der für das Anregungslicht und Fluoreszenzlicht tranparente Träger (30), zumindest teilweise polierte oder reflektierende Oberflächenbereiche 36, 37 aufweist und/oder dort von einem Medium mit kleinerem Brechungsindex umgeben ist sowie austauschbar auf den Meßkopf (1) aufgesetzt ist.

10. Vorrichtung nach Anspruch 9, **dadurch gekennzeichnet, daß** Anregungslicht in den Träger (30) mit mindestens einem Lichtwellenleiter (31) so eingekoppelt wird, daß das Anregungslicht zumindest im Bereich der Schicht (32) total reflektiert wird und es zur gedämpften Totalreflexion kommt.

11. Vorrichtung nach Anspruch 9 oder 10, **dadurch gekennzeichnet, daß** der Träger (30) in einer Ebene langgestreckt ausgebildet ist.

12. Vorrichtung nach Anspruch 9 bis 11, **dadurch gekennzeichnet, daß** der Träger (30) entlang seiner Längsachse in mehrere Bereiche (30.1, 30.2, 30.3) unterteilt ist.

13. Vorrichtung nach Anspruch 9 bis 12, **dadurch gekennzeichnet, daß** der Träger (30) an seiner Stirnfläche, in die das Anregungslicht einkoppelbar ist, gegenüberliegenden Stirnseite eine abgewinkelte Fläche und eine einen fluoreszierenden Stoff enthaltende Schicht (32) aufweist, an der Anregungs- und Fluoreszenzlicht in Richtung auf einen symmetrisch zum Träger (30) ausgebildeten planaren Lichtwellenleiter (35) reflektiert wird und das Licht von dessen abgewinkelter Fläche auf eine am anderen Ende des Lichtwellenleiters (35) angeordnete Stirnfläche und von dort zumindest Fluoreszenzlicht über mindestens einen Lichtwellenleiter (15) auf einen Detektor (4) gerichtet ist, wobei Träger (30) und planarer Lichtwellenleiter (35) in einem Abstand zueinander angeordnet und/oder bis in den Bereich der abgewinkelten Flächen optisch getrennt sind.

14. Vorrichtung nach Anspruch 9 bis 13, **dadurch gekennzeichnet, daß** der Träger (30) u-förmig ausgebildet ist, die beiden Schenkel (30', 30") zumindest teilweise beabstandet angeordnet und/oder optisch voneinander getrennt sind und das Anregungslicht in eine Stirnfläche eines Schenkels (30') über mindestens einen Lichtwellenleiter (31) ein- und zumindest Fluoreszenzlicht über die Stirnfläche des anderen Schenkels (30") in mindestens einen weiteren Lichtwellenleiter (33) auskoppelbar ist.

15. Vorrichtung nach Anspruch 14, **dadurch gekennzeichnet, daß** die beiden Schenkel (30', 30'') des u-förmigen Trägers (30) bogenförmig, keilförmig, kegelförmig oder mittels abgewinkeltem Steg (30"') verbunden sind.

16. Vorrichtung nach einem der Ansprüche 1 bis 14, **dadurch gekennzeichnet, daß** in den Träger (30) Heizelemente (12) und/oder Temperatursensoren (13) integriert oder einführbar sind.

17. Vorrichtung nach einem der Ansprüche 1 bis 16, **dadurch gekennzeichnet, daß** zwischen einem Lichtwellenleiter für fluoreszenzanregendes Licht und fluoreszierendem Stoff enthaltender Schicht (32) ein transparenter Körper (40) aus einem optisch streuenden Material angeordnet oder eine zur Schicht (32) weisende diffus sreuende Oberfläche am Körper (40) ausgebildet oder angeordnet ist.

18. Vorrichtung nach Anspruch 17, **dadurch gekennzeichnet, daß** der Körper (40) aus optisch transparentem, lichtstreuende Partikel enthaltenden und/oder einem wellenlängenselektiven Material gebildet ist.

19. Vorrichtung nach einem der Ansprüche 1 bis 18, **dadurch gekennzeichnet**, mindestens ein weiterer Lichtwellenleiter (16) reflektiertes Licht auf einen weiteren Detektor (5) zur Erfassung eines Referenzsignales richtet.

20. Vorrichtung nach einem der Ansprüche 1 bis 19, **dadurch gekennzeichnet**, der obere beheizte Bereich gegenüber dem unteren Bereich, in dem die Lichtquelle(n) (2) und der/die Detektor(en) (4, 5) aufgenommen sind, thermisch isoliert ist.

21. Verwendung einer Vorrichtung nach einem der Ansprüche 1 bis 20 zur Erfassung fluoreszenzlöschender, fluidischer Stoffe.

## Claims

1. Device for measuring fluorescence excited by light, which has at least one layer (11, 32) that is applied to a support (14, 30) and contains a fluorescing material, having at least one light source (2) which emits light of at least one wavelength which excites fluorescence(s) in the layer(s) (11, 32), and which is directed through the support (14, 30) onto the layer(s) (11) by at least a first optical conductor (3, 15, 16, 18), the fluorescent light being directed by at least a second optical conductor (15) onto at least one detector (4) for determining the intensity of the fluorescent light, **characterised in that** the end faces of all the optical conductors (3, 15, 16, 20, 21, 22, 23) are arranged relative to one another, taking into account their numerical apertures and/or with reference to at least one layer (11, 32) which contains a fluorescing material and is applied to the support (14, 30), and optical conductors (20, 21, 22) which are arranged in a ring as a bundle are arranged with an optical conductor (20, 22), disposed in the interior of the ring for exciting light or for fluorescent light, or a plurality of optical conductors (3, 15, 16) are arranged in series opposite one another in pairs in such a way that it is possible to achieve a local assignment of the measurable fluorescence intensity, and the light source(s) (2), optical conductors (3, 15, 16, 18, 20, 22, 31, 33) and the detector(s) (4, 5) are held in a measuring head (1).

2. Device according to claim 1, **characterised in that** at least the part of the measuring head (17) which holds the outer end(s) of the optical conductors (3, 15, 16, 18) is formed so as to be flexible.

3. Device according to either claim 1 or claim 2, **characterised in that** the upper measuring head region (17) is at least partially bent.

4. Device according to any one of claims 1 to 3, **characterised in that** a filter (7, 8), a system of exchangeable filters and/or coupling optics (20) is/are arranged respectively between the light source (2) and the optical conductor (3, 18) and/or between the detector (4) and the optical conductor (15, 18).

5. Device according to any one of claims 1 to 4, **characterised in that** a plurality of optical conductors (20, 21, 22) are arranged in a ring, a circular arc and/or a star on the measuring head end (17) pointing towards the fluorescing layer(s).

6. Device according to claim 5, **characterised in that** optical conductors (20) for exciting light and reference light (21) or a further fluorescent light are arranged alternately in an outer ring and optical conductors (22) for fluorescent light are arranged in an inner ring.

7. Device according to any one of claims 1 to 6, **characterised in that** the optical conductors (3, 15, 16, 20, 21, 22) for exciting light, fluorescent light and reference light or a further fluorescent light are inclined at different angles with their ends pointing towards the fluorescing layer.

8. Device according to any one of claims 1 to 7, **characterised in that** there is arranged on the upper measuring head region a heater (12) with a temperature sensor (13) and a controller or regulator which is arranged in the measuring head and maintains a temperature, that can be set, at the fluorescing layer(s) (11) and/or at the upper measuring head region (17).

9. Device according to any one of claims 1 to 8, **characterised in that** the support (30), which is transparent to the exciting light and fluorescent light, has at least partially polished or reflecting surface regions (36, 37) and/or is surrounded there by a medium of lower refractive index, and is replaceably mounted on the measuring head (1).

10. Device according to claim 9, **characterised in that** the exciting light is coupled into the support (30) with at least one optical conductor (31) in such a way that the exciting light is totally reflected at least in the region of the layer (32), resulting in attenuated total reflection.

11. Device according to either claim 9 or claim 10, **characterised in that** the support (30) is formed in a plane in an elongated manner.

12. Device according to claims 9 to 11, **characterised in that** the support (30) is subdivided along its longitudinal axis into a plurality of regions (30.1, 30.2, 30.3).

13. Device according to claims 9 to 12, **characterised in that** on its end face opposite its end side into which the exciting light can be coupled, the support (30) has an angular surface and a layer (32) which contains a fluorescing material, at which end face exciting and fluorescent light is reflected in the direction of a planar optical conductor (35) formed symmetrically to the support (30), and the light from the angular surface thereof is directed onto an end face arranged at the other end of the optical conductor (35), and from there at least fluorescent light is directed onto a detector (4) via at least one optical conductor (15), the support (30) and planar optical conductor (35) being arranged spaced apart from one another and/or being optically separated right into the region of the angular surfaces.

14. Device according to claims 9 to 13, **characterised in that** the support (30) is U-shaped, the two limbs (30', 30") are arranged at least partially spaced apart and/or are optically separated from one another, and the exciting light can be coupled into an end face of a limb (30') via at least one optical conductor (31), and at least fluorescent light can be coupled out via the end face of the other limb (30") into at least one further optical conductor (33).

15. Device according to claim 14, **characterised in that** the two limbs (30', 30") of the U-shaped support (30) are connected in the shape of a bow, a wedge or a cone, or by means of an angular web (30"').

16. Device according to any one of claims 1 to 14, **characterised in that** heating elements (12) and/or temperature sensors (13) are integrated or can be introduced into the support (30).

17. Device according to any one of claims 1 to 16, **characterised in that** between an optical conductor for fluorescence-exciting light and a layer (32) containing fluorescing material, a transparent body (40) made from an optically scattering material is arranged, or a diffusely scattering surface, pointing to the layer (32), is constructed or arranged on the body (40).

18. Device according to claim 17, **characterised in that** the body (40) is formed from optically transparent material, a material which contains light-scattering particles and/or a wavelength-selective material.

19. Device according to any one of claims 1 to 18, **characterised in that** at least one further optical conductor (16) directs reflected light onto a further detector (5) for detecting a reference signal.

20. Device according to any one of claims 1 to 19, **characterised in that** the upper heated region is thermally insulated with respect to the lower region, in which the light source(s) (2) and the detector(s) (4, 5) are held.

21. Use of a device according to any one of claims 1 to 20 for detecting fluorescencequenching, fluid materials.

## Revendications

1. Dispositif de mesure de fluorescence activée par la lumière, qui comporte au moins une couche (11, 32), posée sur un support (14, 30), contenant une matière fluorescente, avec au moins une source lumineuse (2) qui émet de la lumière d'au moins une longueur d'onde qui excite la/les fluorescence(s) dans la/les couche(s) (11, 32),
lumière qui est dirigée sur la/les couches (11) par au moins une première fibre optique (3, 15, 16, 18) à travers le support (14, 30),
la lumière fluorescente est dirigée par au moins une seconde fibre optique (15) sur au moins un détecteur (4) pour la détermination de l'intensité de la lumière fluorescente,
**caractérisé en ce que**
les surfaces frontales de toutes les fibres optiques (3, 15, 16, 20, 21, 22, 23) sont disposées, en tenant compte de leurs ouvertures numériques, les unes par rapport aux autres et/ou par rapport à au moins une couche (11, 32), contenant une matière fluorescente, posée sur le support (14, 30) et
sont disposées sous forme de fibres optiques (20, 21, 22) agencées en cercle en paquet avec une fibre optique (20, 22) disposée à l'intérieur du cercle pour la lumière d'activation ou pour la lumière fluorescente ou plusieurs fibres optiques (3, 15, 16) en rangées se faisant face par paire,
**en ce qu'**on obtient une affectation locale de l'intensité de fluorescence mesurable tandis que la/les source(s) lumineuse(s) (2), les fibres optiques (3, 15, 16, 18, 20, 22, 31, 33) et le/les détecteur(s) sont logés dans une sonde (1).

2. Dispositif selon la revendication 1, **caractérisé en ce qu'**au moins la partie de la sonde (17), qui loge l'/les extrémité(s) externe(s) des fibres optiques (3, 15, 16, 18), est souple.

3. Dispositif selon la revendication 1 ou 2, **caractérisé en ce que** la zone supérieure de la sonde (17) est au moins partiellement flambée.

4. Dispositif selon l'une quelconque des revendications 1 à 3, **caractérisé en ce qu'**un filtre (7, 8), un système de filtres échangeables et/ou un dispositif optique de couplage (20) est/sont disposés entre la source lumineuse (2) et les fibres optiques (3, 18) et/ou entre le détecteur (4) et les fibres optiques (15, 18).

5. Dispositif selon l'une quelconque des revendications 1 à 4, **caractérisé en ce que** plusieurs fibres optiques (20, 21, 22) sont disposées en cercle, en arc et/ou en étoile sur l'extrémité de sonde (17) dirigée sur la/les couche(s) fluorescente(s).

6. Dispositif selon la revendication 5, **caractérisé en ce que** des fibres optiques (20) pour la lumière d'activation et la lumière de référence (21) ou une autre lumière fluorescente sont disposées en alternance dans un cercle externe et des fibres optiques (22) pour la lumière fluorescente sont disposées dans un cercle interne.

7. Dispositif selon l'une quelconque des revendications 1 à 6, **caractérisé en ce que** les fibres optiques (3, 15, 16, 20, 21, 22) pour la lumière d'excitation, la lumière fluorescente et la lumière de référence ou une autre lumière fluorescente sont inclinées suivant différents angles avec leurs extrémités orientées vers la couche fluorescente.

8. Dispositif selon l'une quelconque des revendications 1 à 7, **caractérisé en ce que**, sur la zone supérieure de la sonde, on a disposé un chauffage (12) avec un capteur de température (13) et une commande ou un dispositif de réglage, disposé(e) dans la sonde, respectant une température pouvant être prédéterminée sur la/les couche(s) fluorescente(s) (11) et/ou sur la zone supérieure de la sonde (17).

9. Dispositif selon l'une quelconque des revendications 1 à 8, **caractérisé en ce que** le support (30) transparent à la lumière d'excitation et à la lumière fluorescente comporte des zones superficielles (36, 37) au moins partiellement polies ou réfléchissantes et/ou est, à cet emplacement-là, entouré d'un agent avec un coefficient de réfraction plus faible ainsi que posé sur la sonde (1) de manière à pouvoir être changé.

10. Dispositif selon la revendication 9, **caractérisé en ce que** la lumière d'excitation est couplée dans le support (30) avec au moins une fibre optique (31) de sorte que la lumière d'excitation est entièrement réfléchie au moins au niveau de la couche (32) et que l'on obtient une réflexion totale atténuée.

11. Dispositif selon la revendication 9 ou 10, **caractérisé en ce que** le support (30) est réalisé de manière allongée sur un plan.

12. Dispositif selon la revendication 9 à 11, **caractérisé en ce que** le support (30) est subdivisé en plusieurs zones (30.1, 30.2, 30.3) le long de son axe longitudinal.

13. Dispositif selon la revendication 9 à 12, **caractérisé en ce que** le support (30) comporte, sur sa face frontale, faisant face à la surface frontale dans laquelle la lumière d'excitation peut être couplée, une surface recourbée en angle et une couche (32) contenant une matière fluorescente, surface sur laquelle la lumière d'excitation et la lumière fluorescente sont réfléchies en direction d'une fibre optique (35) planaire réalisée de manière symétrique au support (30) et la lumière de sa surface recourbée en angle est dirigée sur une surface frontale disposée à l'autre extrémité de la fibre optique (35) et, de cet emplacement, au moins la lumière fluorescente est dirigée sur un détecteur (4) par le biais d'au moins une fibre optique (15), sachant que le support (30) et la fibre optique planaire (35) sont disposés à distance l'un de l'autre et/ou sont séparés du point de vue optique jusque dans la zone des surfaces recourbées en angle.

14. Dispositif selon la revendication 9 à 13, **caractérisé en ce que** le support (30) est réalisé en forme de U, les deux montants (30', 30") sont disposés au moins en partie à distance et/ou séparés l'un de l'autre du point de vue optique et que la lumière d'excitation peut être couplée dans une surface frontale d'un montant (30') par le biais d'au moins une fibre optique (31) et au moins la lumière fluorescente peut être découplée dans au moins une autre fibre optique (33) par le biais de la surface frontale de l'autre montant (30").

15. Dispositif selon la revendication 14, **caractérisé en ce que** les deux montants (30', 30") du support en forme de U (30) sont reliés en arc, en coin, en cône ou au moyen d'une barre recourbée en angle (30"').

16. Dispositif selon l'une quelconque des revendications 1 à 14, **caractérisé en ce que** des éléments de chauffe (12) et/ou des capteurs de température (13) sont intégrés ou peuvent être insérés dans le support (30).

17. Dispositif selon l'une quelconque des revendications 1 à 16, **caractérisé en ce qu'**un élément transparent (40) d'un matériau à dispersion optique est disposé entre une fibre optique pour la lumière d'excitation de la fluorescence et une couche (32) contenant une matière fluorescente ou une superficie à dispersion diffuse orientée vers la couche (32) est réalisée ou disposée sur l'élément (40).

18. Dispositif selon la revendication 17, **caractérisé en ce que** l'élément (40) est réalisé dans un matériau optiquement transparent, contenant des particules à diffusion lumineuse et/ou un matériau à sélection de longueurs d'onde.

19. Dispositif selon l'une quelconque des revendications 1 à 18, **caractérisé en ce qu'**au moins une autre fibre optique (16) dirige la lumière réfléchie sur un autre détecteur (5) pour le captage d'un signal de référence.

20. Dispositif selon l'une quelconque des revendications 1 à 19, **caractérisé en ce que** la zone chauffée supérieure est thermiquement isolée par rapport à la zone inférieure dans laquelle la/les source(s) lumineuse(s) (2) et le/les détecteur(s) (4, 5) sont logés.

21. Utilisation d'un dispositif selon l'une quelconque des revendications 1 à 20 pour le captage de matières fluidiques éteignant la fluorescence.
